# EUROPEAN PATENT APPLICATION

(11) **EP 4 773 016 A1**
(43) Date of publication of application: **08.07.2026**
(21) Application number: 24869986.0
(22) Date of filing: 15.07.2024
(51) Int. Cl.: G06F 16/29

(54) **MOVEMENT TRACK PLAYBACK METHOD AND APPARATUS, ELECTRONIC DEVICE AND STORAGE MEDIUM**

(30) Priority: 25.09.2023 CN 202311244383
(71) Applicant: TENCENT TECHNOLOGY (SHENZHEN) COMPANY LIMITED, Shenzhen, Guangdong 518057 (CN)
(72) Inventor: SUN, Xiao, Shenzhen, Guangdong 518057 (CN)
(74) Representative: Reddie & Grose LLP
(86) International application number: PCT/CN2024/105472
(87) International publication number: WO 2025/066431

(57) **Abstract**

An movement track playback method, executed by an electronic device. The method comprises: acquiring a three-dimensional virtual scene, and determining a real movement track of a real object (201); mapping the real movement track into the three-dimensional virtual scene so as to obtain a virtual movement track (202); in the three-dimensional virtual scene, setting a virtual object corresponding to the real object, and setting a virtual lens corresponding to the virtual object, a preset relative position relationship being maintained between the virtual lens and the virtual object (203); controlling the virtual object to move according to the virtual movement track, and controlling the virtual lens to acquire a picture of the virtual object moving according to the virtual movement track (204); and displaying the picture (205).

## Description

This application claims priority to Chinese Patent Application No. 2023112443832, entitled "MOVEMENT TRACK PLAYBACK METHOD AND APPARATUS, ELECTRONIC DEVICE, AND STORAGE MEDIUM" filed on September 25, 2023.

### FIELD OF THE TECHNOLOGY

This application relates to electronic map data processing technologies, and in particular, to a movement track playback method and apparatus, an electronic device, and a storage medium.

### BACKGROUND OF THE DISCLOSURE

With the development and popularization of sensor technology, positioning using Global Navigation Satellite System (GNSS) has become a fundamental capability of terminal devices, such as automobiles, mobile phones, and watches. After utilizing the GNSS to complete user trajectory/track recording, the relevant devices or application programs can provide dynamic trajectory/track playback.

Movement trajectory/track playback refers to continuously updating the user trajectory/track and the map status of the display area at appropriate time intervals until the end of the user trajectory/track.

However, the current movement trajectory/track playback typically presents the movement of the target object on a simple map interface and cannot accurately reconstruct the navigation scenarios encountered by users during real-world actions.

### SUMMARY

Embodiments of this application provide a movement track playback method and apparatus, an electronic device, and a storage medium.

In one aspect, the embodiments of this application provide a movement track playback method, the method being executable by an electronic device and including:
determining a real movement track of a real object;
determining a three-dimensional virtual scene;
mapping the real movement track to the three-dimensional virtual scene to obtain a virtual movement track;
determining, in the three-dimensional virtual scene, a virtual object representing the real object and a virtual lens for capturing an image of the virtual object, the virtual lens being kept in a preset relative positional relationship with the virtual object;
controlling the virtual object to move along the virtual movement track, and controlling the virtual lens to capture the image of the virtual object moving along the virtual movement track; and
displaying the image of the virtual object.

In another aspect, the embodiments of this application further provide a movement track playback apparatus, including:
an obtaining unit, configured to obtain a three-dimensional virtual scene and determine a real movement track of a real object;
a mapping unit, configured to map the real movement track to the three-dimensional virtual scene to obtain a virtual movement track;
a determining unit, configured to determine, in the three-dimensional virtual scene, a virtual object representing the real object and a virtual lens for capturing an image of the virtual object, the virtual lens being kept in a preset relative positional relationship with the virtual object;
a control unit, configured to control the virtual object to move along the virtual movement track, and control the virtual lens to capture the image of the virtual object moving along the virtual movement track; and
a display unit, configured to display the image of the virtual object.

In another aspect, the embodiments of this application further provide an electronic device including a memory and a processor, the memory having a plurality of instructions stored therein, and the processor being configured to load the instructions from the memory to execute the operations of the movement track playback method according to any one of the embodiments of this application.

In another aspect, the embodiments of this application further provide a computer-readable storage medium having a plurality of instructions stored therein, the instructions being configured for loading by a processor to execute the operations of the movement track playback method according to any one of the embodiments of this application.

In another aspect, the embodiments of this application further provide a computer program product including a computer program/instructions, the computer program/instructions, when executed by a processor, implementing the operations of the movement track playback method according to any one of the embodiments of this application.

Details of one or more embodiments of this application are set forth in the following drawings and descriptions. Other features, objects, and advantages of this application will become apparent from the specification, drawings, and claims.

### BRIEF DESCRIPTION OF THE DRAWINGS

To more clearly illustrate technical solutions in embodiments of this application or the conventional technology, the drawings required for the description of the embodiments or the conventional technology are briefly introduced below. It is apparent that the drawings in the following description are merely the embodiments of this application. A person of ordinary skill in the art may, without any inventive effort, obtain other drawings according to the disclosed drawings.
FIG. 1 is a schematic diagram of a scenario of a movement track playback method according to an embodiment of this application.
FIG. 2 is a schematic flow diagram of a movement track playback method according to an embodiment of this application.
FIG. 3 is a schematic diagram of a relative positional relationship between a vehicle and a virtual lens in a side view of the vehicle according to an embodiment of this application.
FIG. 4 is a schematic diagram of a relative positional relationship between a virtual lens and a vehicle in a rear view of the vehicle according to an embodiment of this application.
FIG. 5 is a schematic diagram of a pitch angle range of a virtual lens according to an embodiment of this application.
FIG. 6 is a schematic diagram of a lens movement segment of a virtual object during intersection entry according to an embodiment of this application.
FIG. 7 is a schematic flow diagram of the application of a movement track playback method in an electronic device according to an embodiment of this application.
FIG. 8 is a schematic flow diagram of a method for acquiring driving data according to an embodiment of this application.
FIG. 9 is a specific implementation flowchart of an electronic device performing movement track playback according to an embodiment of this application.
FIG. 10 is a playback image of a first segment of a track to be played back according to an embodiment of this application.
FIG. 11 is a playback image of a second segment of a track to be played back according to an embodiment of this application.
FIG. 12 is a playback image of a third segment of a track to be played back according to an embodiment of this application.
FIG. 13 is a playback image of a fourth segment of a track to be played back according to an embodiment of this application.
FIG. 14 is a playback image of a vehicle passing through an intersection according to an embodiment of this application.
FIG. 15 is a playback image of a vehicle turning at an intersection according to an embodiment of this application.
FIG. 16 is a playback image of a vehicle approaching a special building according to an embodiment of this application.
FIG. 17 is a playback image of a vehicle passing by a special building according to an embodiment of this application.
FIG. 18 is a playback image of a vehicle after passing a special building according to an embodiment of this application.
FIG. 19 is a schematic structural diagram of a movement track playback apparatus according to an embodiment of this application.
FIG. 20 is a schematic structural diagram of an electronic device according to an embodiment of this application.

### DESCRIPTION OF EMBODIMENTS

Technical solutions in embodiments of this application are clearly and completely described below with reference to the drawings in the embodiments of this application. It is apparent that the described embodiments are merely part of rather than all of the embodiments of this application. All other embodiments obtained by a person of ordinary skill in the art based on the embodiments of this application, without any inventive effort, fall within the scope of protection of this application.

The embodiments of this application provide a movement track playback method and apparatus, an electronic device, and a storage medium.

The movement track playback apparatus can be specifically integrated into an electronic device, which may be a terminal, a server, or the like. The terminal may be an onboard terminal, an intelligent voice interaction device, a mobile phone, a tablet computer, a smart Bluetooth device, a laptop, a personal computer (PC), or the like. The server may be a single server or a server cluster including a plurality of servers.

In some embodiments, the movement track playback apparatus may further be integrated into a plurality of electronic devices. For example, the movement track playback apparatus may be integrated into a plurality of servers, and the movement track playback method of this application may be implemented by the plurality of servers. In some embodiments, the terminal may further be used as a server to perform part or all of the functions of the server.

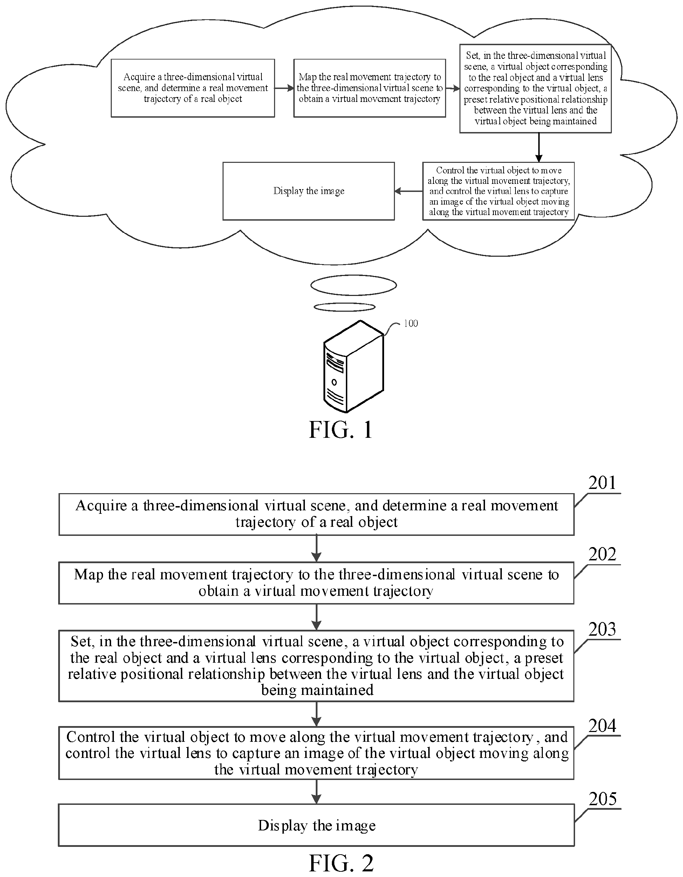

For example, referring to FIG. 1, the electronic device 100 may perform the following operations: acquiring a three-dimensional virtual scene, and determining a real movement track of a real object; mapping the real movement track to the three-dimensional virtual scene to obtain a virtual movement track; setting, in the three-dimensional virtual scene, a virtual object corresponding to the real object and a virtual lens corresponding to the virtual object, a preset relative positional relationship between the virtual lens and the virtual object being maintained; controlling the virtual object to move along the virtual movement track, and controlling the virtual lens to capture an image of the virtual object moving along the virtual movement track; and displaying the image.

In specific implementations of this application, related data such as driving data, positioning information, and position information are involved. When the following embodiments of this application are applied to specific products or technologies, permissions or consent are required, and the collection, use, and processing of relevant data need to comply with the applicable laws, regulations, and standards of relevant countries and regions.

The following will be described in detail. The sequence numbers of the following embodiments are not intended to limit the preferred order of the embodiments.

In this embodiment, a movement track playback method related to map navigation is provided. As shown in FIG. 2, a specific flow of the movement track playback method may be as follows:

201: Acquire a three-dimensional virtual scene, and determine a real movement track of a real object.

The three-dimensional virtual scene refers to a virtual environment with a sense of depth and realism, generated by computer technology and graphics algorithms. This virtual environment may be a simulated scene from the real world or an imagined fictional scene. In this embodiment, the three-dimensional virtual scene may be a scene simulated based on a geographic map of the real world. In the three-dimensional virtual scene, elements such as terrain, topography, buildings, and roads on the Earth's surface can be presented in a three-dimensional manner. In the three-dimensional virtual scene, a user can observe different regions and terrain features by rotating, zooming, and panning the viewing perspective, thereby gaining a better understanding of the Earth's geographical environment. The three-dimensional virtual scene can be constructed based on data such as satellite remote sensing data, topographic survey data, and building data. These data are integrated into a geographic information system and rendered using three-dimensional visualization technology to obtain the three-dimensional virtual scene.

The real object may be an object existing in the real world whose real movement track needs to be played back. In this embodiment, the real object may be a self-mobile object. The real object can also carry a positioning device or be equipped with a positioning system to record the real movement track. For example, the real object may include, but is not limited to, vehicles, mobile terminals, aircraft, trains, ships, and mobile robots.

The real movement track can be determined using driving data, which refers to various data generated by the real object during the movement. For example, the driving data includes, but is not limited to, real movement track data, movement speed, acceleration, timestamps, mileage, and weather information. As an example, in an example of a vehicle, the driving data can be collected through onboard sensors, the Global Positioning System (GPS), onboard devices, mobile applications, or the like. The real movement track data refers to data that records the real movement track, which may include discrete points along the real movement track or parameters of a mathematical expression representing or fitting the real movement track.

The real movement track refers to the route path traveled by the real object in the real world over a period of time. It records the position coordinates of the real object at different moments (hereinafter also referred to as position points), forming a track data set. In an example of a vehicle, the real movement track can be recorded and obtained in real time through onboard devices, GPS, mobile devices, or the like. Each position point may include information such as longitude, latitude, altitude, and timestamp. By connecting these position points in chronological order, the real movement track of the vehicle over a period of time can be reconstructed.

In some implementations, the data configured for rendering the three-dimensional virtual scene and the driving data of the real object may be pre-collected and stored locally in the electronic device, or stored in a cloud server in communication with the electronic device. When the movement track playback is required, the electronic device may retrieve data configured for rendering the three-dimensional virtual scene and the driving data from a local or cloud server. After rendering the data configured for rendering the three-dimensional virtual scene, the three-dimensional virtual scene can be obtained.

202: Map the real movement track to the three-dimensional virtual scene to obtain a virtual movement track.

A specific implementation of mapping the real movement track to the three-dimensional virtual scene may include: matching each position coordinate in the track data with a corresponding position in the three-dimensional virtual scene to obtain a mapped coordinate corresponding to each of the above position coordinates in the three-dimensional virtual scene, and then drawing, based on the obtained mapped coordinates, the virtual movement track in the three-dimensional virtual scene.

Since the three-dimensional virtual scene is proportionally constructed based on the real world, each position point in the movement track obtained from the real world can be matched to a corresponding position in the three-dimensional virtual scene.

In some implementations, before the mapping the real movement track to the three-dimensional virtual scene to obtain a virtual movement track, the movement track may be preprocessed. The preprocessing may include removing outliers, smoothing the track, transforming coordinate systems, and the like, thereby ensuring the accuracy and stability of the data.

203: Set, in the three-dimensional virtual scene, a virtual object corresponding to the real object and a virtual lens corresponding to the virtual object, a preset relative positional relationship between the virtual lens and the virtual object being maintained.

The virtual lens may refer to a virtual camera. In the three-dimensional virtual scene, the virtual lens is configured to simulate the viewing perspective of a human eye or a camera. By adjusting the position, orientation, field of view, and other properties of the virtual lens, different viewing effects and perspectives can be achieved. In some embodiments, the virtual lens setting options may include the pitch angle, orientation, position, and the like of the virtual lens.

In some implementations, the virtual object may be constructed according to the information of the real object. For example, the attributes of the virtual object, such as color, texture, shape, and size, may be adjusted according to the appearance and features of the real object, so as to more closely resemble the real object. In some embodiments, a specific image marker may be set in the three-dimensional virtual scene to represent the real object, such as an oriented image marker.

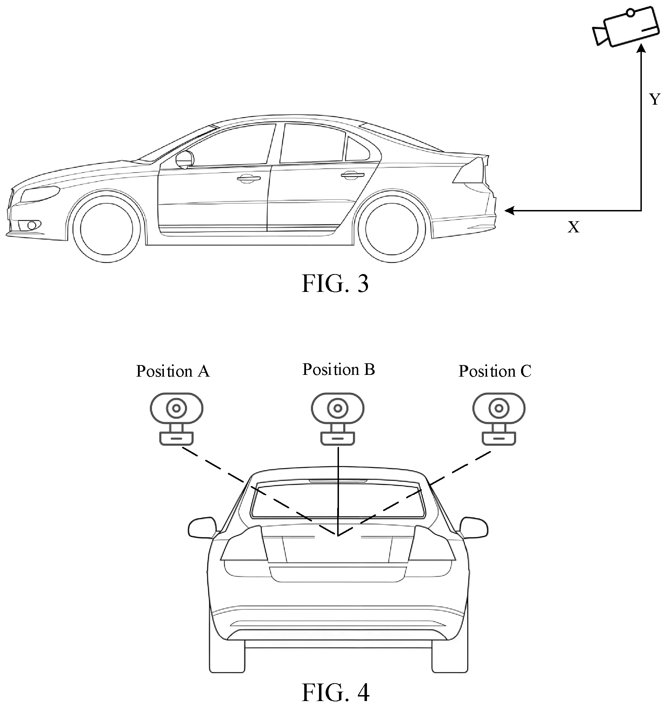

The preset relative positional relationship between the virtual lens and the virtual object may be maintained. That is, the virtual lens is kept in a preset relative positional relationship with the virtual object. The preset relative positional relationship may be that the virtual lens is located above and behind the virtual object, thereby allowing the virtual lens to capture images of the virtual object as well as images along the movement direction of the virtual object. Exemplarily, in an example where the virtual object is a virtual vehicle, as shown in FIG. 3, FIG. 3 shows a relative positional relationship between the vehicle and the virtual lens in a side view of the vehicle. In the side view of the vehicle, the virtual lens may be located above and behind the vehicle, the horizontal distance between the virtual lens and the rear end of the vehicle may be X, and the vertical distance between the virtual lens and the rear end of the vehicle may be Y. In some embodiments, the values of X and Y may be custom-set according to actual requirements, which are not limited thereto.

In some embodiments, as shown in FIG. 4, FIG. 4 shows a relative positional relationship between the virtual lens and the vehicle in a rear view of the vehicle. In the rear view of the vehicle, the virtual lens may be located at the center of the vehicle (e.g., position B in FIG. 4). In addition, the virtual lens may be located at the left side of the vehicle (e.g., position A in FIG. 4) or at the right side of the vehicle (e.g., position C in FIG. 4), which is not limited thereto.

During the movement of the virtual object, the preset relative positional relationship between the virtual lens and the virtual object is maintained. In other words, as the virtual object moves, the virtual lens moves along with the virtual object, and the relative positional relationship between the virtual lens and the virtual object remains unchanged throughout the movement.

204: Control the virtual object to move along the virtual movement track, and control the virtual lens to capture an image of the virtual object moving along the virtual movement track.

In operation 204, the controlling the virtual object to move along the virtual movement track, and controlling the virtual lens to capture an image of the virtual object moving along the virtual movement track includes:
S1: Acquire position information of the virtual object on the virtual movement track.

The position information may be the position coordinate of the virtual object's current position on the virtual movement track. The position coordinate may be represented by longitude and latitude. Since the virtual movement track is formed by connecting a plurality of position points, in some implementations, it may be detected which of the plurality of position points on the virtual movement track corresponds to the current position of the virtual object, and the position coordinate of the matched position point is then used as the current position information of the virtual object. As an example, the position information of the virtual object may be compared with the plurality of position points on the virtual movement track to identify the position point closest to the position information, which is then used as the matched position point.

S2: Based on the position information, control the virtual object to move along the virtual movement track, and control the virtual lens to capture the image of the virtual object moving along the virtual movement track.

In operation S2, a specific implementation of controlling, based on the position information, the virtual object to move along the virtual movement track may include:
A1: Determine, according to the position information, a remaining track length of the virtual object, the remaining track length being a length of the virtual movement track along which the virtual object has not moved.

After the position information of the virtual object is determined, a position point on the virtual movement track that matches the position information may be identified. Then, the plurality of position points from the matched position point to the end point of the virtual movement track may be sequentially traversed in the virtual movement track to obtain the remaining track. Based on the position coordinates of each of the plurality of position points from the matched position point to the end point of the virtual movement track, distance calculations may be performed to obtain the remaining track length.

A2: Determine, according to the remaining track length, a target movement speed of the virtual object, the remaining track length being negatively correlated with the target movement speed.

The target movement speed may be a movement speed that the virtual object is required to maintain when moving in the three-dimensional virtual scene.

Since the movement track playback process also represents the movement process of the virtual object in the three-dimensional virtual scene, the movement speed of the virtual object may correspond to the playback speed of the movement track playback. The faster the movement speed, the faster the playback speed of the movement track playback.

In some implementations, the current movement speed of the virtual object may be increased as the remaining track length decreases, thereby obtaining the target movement speed. In some embodiments, each time the remaining track length decreases by a preset length, the movement speed of the virtual object may be increased by a preset speed over the current speed, thereby obtaining the target movement speed.

A3: Control, based on the target movement speed, the virtual object to move along the virtual movement track.

As an example, after the target movement speed is determined, the virtual object may be controlled to move along the virtual movement track at the target movement speed.

In this implementation, by determining, according to the remaining track length, a target movement speed of the virtual object, where the remaining track length is negatively correlated with the target movement speed, and controlling, based on the target movement speed, the virtual object to move along the virtual movement track, the movement speed of the virtual object increases as it approaches the end point of the virtual movement track, i.e., the playback speed becomes faster, avoiding visual fatigue for the user.

In operation S2, a specific implementation of controlling, based on the position information, the virtual object to move along the virtual movement track may further include:
According to the remaining track length, a target virtual lens angle of the virtual lens is determined, where the remaining track length is positively correlated with the target virtual lens angle, the target virtual lens angle being a pitch angle of the virtual lens, and the target virtual lens angle ranging from -90 degrees to 0 degrees.

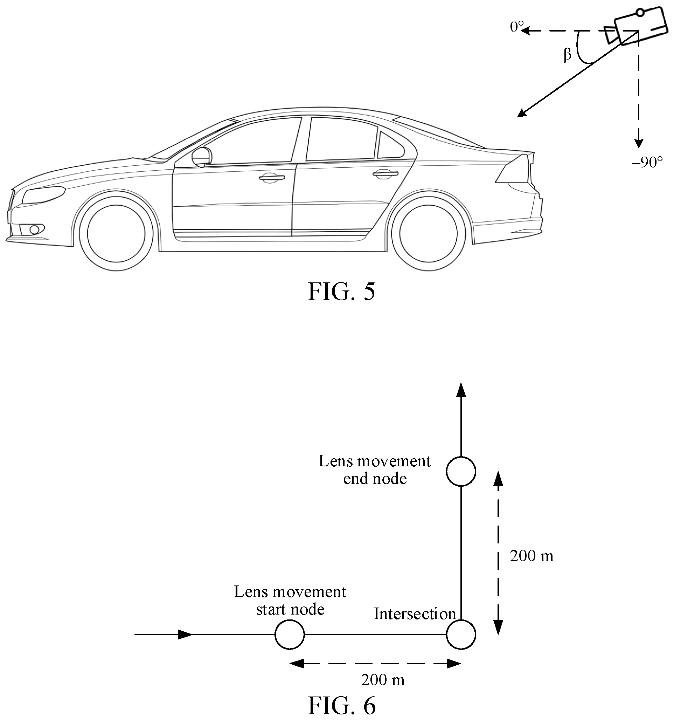

As shown in FIG. 5, the pitch angle of the virtual lens may be β, where -90° ≤ β ≤ 0°. As shown in FIG. 5, when the pitch angle β of the virtual lens decreases, the image captured by the virtual lens approaches a top-down view of the vehicle, and in this case, the objects in the three-dimensional virtual scene appear simpler. When the pitch angle β of the virtual lens increases, the image captured by the virtual lens approaches a horizontal view of the vehicle, and in this case, the objects appear more detailed, enabling the user to experience the real scene during the movement track playback in a more immersive manner.

In some implementations, the current pitch angle corresponding to the virtual lens may be reduced as the remaining track length decreases, thereby obtaining a target pitch angle.

Based on the target virtual lens angle, the virtual lens is controlled to capture the image of the virtual object moving along the virtual movement track.

As an example, after the target virtual lens angle is determined, the current pitch angle of the virtual lens may be adjusted to the target virtual lens angle, and the virtual lens may then be controlled to capture the image of the virtual object moving along the virtual movement track.

In this implementation, as the movement track playback approaches the end, the pitch angle of the virtual lens is adjusted to be smaller, so that the image captured by the virtual lens can gradually transition from a detailed display to a simplified display, avoiding visual fatigue for the user.

In operation S2, a specific implementation of controlling, based on the position information, the virtual lens to capture the image of the virtual object moving along the virtual movement track may further include:
According to the remaining track length, a target map scale corresponding to the virtual lens is determined, the target map scale being positively correlated with the remaining track length.

The map scale refers to the ratio of the length of a line segment on the map to the length of the corresponding line segment on the ground after horizontal projection. It represents the degree of reduction of the map graphics and is also referred to as the reduction scale. Generally, the larger the map scale, the smaller the error and the higher the measurement accuracy on the map.

Based on the target map scale, the virtual lens is controlled to capture the image of the virtual object moving along the virtual movement track.

In some implementations, the current map scale corresponding to the virtual lens may be reduced as the remaining track length decreases, thereby obtaining the target map scale.

As an example, after the target map scale is determined, the current map scale corresponding to the virtual lens may be adjusted to the target map scale by adjusting the focal length of the virtual lens, and the virtual lens may then be controlled to capture the image of the virtual object moving along the virtual movement track.

The smaller the focal length, the wider the field of view and the larger the capture range; more of the image can be captured, but each object occupies a smaller proportion of the image. The larger the focal length, the narrower the field of view and the smaller the capture range; less of the image can be captured, but each object occupies a larger proportion of the image.

In this implementation, as the movement track playback approaches the end, the map scale corresponding to the virtual lens is adjusted to be smaller, so that the image captured by the virtual lens can gradually expand in the field of view, avoiding visual fatigue for the user.

In some implementations, the movement speed of the virtual object, the pitch angle of the virtual lens, and the map scale corresponding to the virtual lens are simultaneously controlled according to the remaining track length. During the movement track playback, as the remaining track length decreases, the virtual object increases the movement speed. Therefore, when the remaining track length decreases, simultaneously reducing the pitch angle and the map scale allows the image captured by the virtual lens to better match the movement speed for display, preventing the user from experiencing dizziness when continuously viewing an image with a narrow field of view and a large pitch angle at higher playback speeds.

In some implementations, the virtual movement track includes a plurality of control nodes. In operation S2, a specific implementation of based on the position information, controlling the virtual object to move along the virtual movement track, and controlling the virtual lens to capture the image of the virtual object moving along the virtual movement track may include: When it is determined, according to the position information, that the virtual object has arrived at a control node, a control strategy corresponding to the control node is acquired.

The control nodes may be position points pre-marked on the virtual movement track, so the control nodes can also be represented by longitude and latitude. Exemplarily, the position where the real object encounters a special event may be marked on the real movement track of the real world, and the position may then be mapped to the virtual movement track to obtain the control node. In some embodiments, the special events include arriving at an intersection, reaching a specified building, entering a designated road segment, and the like. The special events can be custom-set according to actual requirements, which are not limited thereto. For each special event, a set of control strategies may be pre-established, and the control strategies corresponding to the special event may be bound to the control nodes corresponding to the event, thereby establishing associations between a plurality of control nodes and a plurality of control strategies.

Based on the control strategy corresponding to the control node, the virtual object is controlled to move along the virtual movement track, and the virtual lens is controlled to capture the image of the virtual object moving along the virtual movement track.

The based on the control strategy corresponding to the control node, controlling the virtual object to move along the virtual movement track, and controlling the virtual lens to capture the image of the virtual object moving along the virtual movement track includes:
B1: Acquire a type of the control node.

Each control node may carry a type label for representing the type of the control node. The type of each control node can be determined by identifying the type label of the control node. In some embodiments, the type of the control node may include a normal control node, a lens movement control node, and the like. The lens movement control node may refer to a node on the virtual movement track where a lens movement operation is required, whereas the normal control node may refer to a node on the virtual movement track where no lens movement operation is required (for example, the lens orientation corresponding to the normal control node is fixed toward the route direction of the virtual object's movement path). The lens movement control node may include a lens movement start node and a lens movement end node. When the virtual object reaches the lens movement start node, the lens movement operation is started, and when the virtual object reaches the lens movement end node, the lens movement operation is ended.

The lens movement operation may refer to an operation of adjusting the lens orientation, for example, gradually adjusting the lens orientation from facing the virtual object to facing a building in the three-dimensional virtual scene.

B2: When the control node is a normal control node, acquire control parameters corresponding to the normal control node, the control parameters including a movement speed of the virtual object, a virtual lens angle of the virtual lens, and a map scale corresponding to the virtual lens, the virtual lens angle being a pitch angle of the virtual lens, and the virtual lens angle ranging from -90 degrees to 0 degrees.

A plurality of normal control nodes may be provided, and each normal control node in the plurality of normal control nodes may be pre-bound to a set of control parameters. Exemplarily, the control parameters, as well as the mapping relationship between the control parameters and the normal control nodes, may be pre-stored in a preset parameter database. Upon determining the normal control node currently reached by the virtual object, the control parameters corresponding to the normal control node may be retrieved from the preset parameter database.

In some implementations, the normal control node includes a first control node, a second control node, and a third control node, and the first control node, the second control node, and the third control node divide the virtual movement track into a first sub-track, a second sub-track, a third sub-track, and a fourth sub-track. The first sub-track is a track between the first control node and a starting point of the virtual movement track. The second sub-track is a track between the first control node and the second control node. The third sub-track is a track between the second control node and the third control node. The fourth sub-track is a track between the third control node and an end point of the virtual movement track.

In some embodiments, a ratio of track lengths of the first sub-track, the second sub-track, the third sub-track, and the fourth sub-track is 2:1:2:5.

The number of normal control nodes may not be limited to the three in the above embodiments, and may be other numbers, for example, two, four, and five, which is not limited thereto. Different numbers of normal control nodes may divide the virtual movement track into the corresponding number of sub-tracks. For example, two normal control nodes may divide the track into three sub-tracks, and five normal control nodes may divide the track into six sub-tracks. The ratios of the track lengths of the plurality of divided sub-tracks may be set according to actual requirements, which are not limited thereto.

In some implementations, control parameters corresponding to the first control node include a first movement speed, a first virtual lens angle, and a first map scale. Control parameters corresponding to the second control node include a second movement speed, a second virtual lens angle, and a second map scale. Control parameters corresponding to the third control node include a third movement speed, a third virtual lens angle, and a third map scale. The first movement speed is less than the second movement speed, and the second movement speed is less than the third movement speed. The first virtual lens angle is greater than or equal to the second virtual lens angle, and the second virtual lens angle is greater than the third virtual lens angle. The first map scale is greater than the second map scale, and the second map scale is greater than the third map scale.

In some implementations, the starting point of the virtual movement track corresponds to initial control parameters, where the initial control parameters include an initial movement speed, an initial virtual lens angle, and an initial map scale. The initial movement speed is less than or equal to the first movement speed, the initial virtual lens angle is greater than the first virtual lens angle, and the initial map scale is greater than the first map scale.

Exemplarily, in an example where a virtual movement track represents a 50-kilometer real movement track, the initial movement speed may be 500 m/s, the first movement speed may be 500 m/s, the second movement speed may be 2000 m/s, and the third movement speed may be 5000 m/s.

In some embodiments, the initial map scale may be 1:10, where a map scale of 1:10 may indicate that each unit length on the map represents 10 meters on the ground. The first map scale may be 1:20, the second map scale may be 1:50, and the third map scale may be 1:100.

In some embodiments, the initial virtual lens angle may be -10°, the first virtual lens angle may be -20°, the second virtual lens angle may be -30° or -20°, and the third virtual lens angle may be -90°.

When the virtual lens angle of the virtual lens is 90°, the image captured by the virtual lens corresponds to a top-down view of the three-dimensional virtual scene, that is, a two-dimensional planar image.

In some implementations, to ensure that the playback duration of each sub-track falls within an appropriate range, a corresponding playback duration may be set for each sub-track. For example, the playback duration of the first sub-track may be set between 3 seconds and 12 seconds; the playback duration of the second sub-track may be set between 2 seconds and 8 seconds; the playback duration of the third sub-track may be set between 1 second and 5 seconds; the playback duration of the fourth sub-track may be set to 1 second to 5 seconds.

B3: Control, based on the movement speed, the virtual object to move along the virtual movement track.

B4: Control, based on the virtual lens angle and the map scale, the virtual lens to capture the image of the virtual object moving along the virtual movement track.

In this implementation, by segmenting the virtual movement track and controlling the captured images to provide a more immersive view at a relatively slow movement speed during the first half of the movement track playback, the user's viewing experience can be enhanced. During the second half of the track, by increasing the movement speed and capturing images with a larger field of view and simpler composition, visual fatigue for the user can be avoided.

In some implementations, the based on the control strategy corresponding to the control node, controlling the virtual object to move along the virtual movement track, and controlling the virtual lens to capture the image of the virtual object moving along the virtual movement track includes:
C1: Acquire a type of the control node.

C2: When the control node is a lens movement control node, determine a lens movement object corresponding to the lens movement control node.

The lens movement object may be an object in the three-dimensional virtual scene that has been pre-marked for lens movement operations. For example, the lens movement object may be a building, an intersection, a landmark, or the like in the three-dimensional virtual scene.

In some implementations, each lens movement control node may be pre-bound to a lens movement object. Therefore, after a lens movement control node is determined, the corresponding lens movement object may be selected according to the lens movement control node. Exemplarily, for example, when the vehicle navigates in the real world, the user may mark a building as the lens movement object in the navigation system upon passing the building. The navigation system may then automatically take the position point of the building in the real movement track as a lens movement position point and map the lens movement position point to the three-dimensional virtual scene to obtain the lens movement control node. The building in the navigation system may be mapped to the three-dimensional virtual scene to obtain the lens movement object.

C3: Acquire a lens orientation corresponding to the lens movement object.

Different lens movement objects are pre-associated with different lens orientations. Therefore, after a lens movement object is determined, a lens orientation corresponding to the lens movement object may be selected from a plurality of preset lens orientations as the lens orientation.

As an implementation, the acquiring a lens orientation corresponding to the lens movement object includes:
When it is detected that the lens movement object is an intersection in the three-dimensional virtual scene, a movement direction of the virtual object is determined as the lens orientation.

As another implementation, the acquiring a lens orientation corresponding to the lens movement object includes:
When it is detected that the lens movement object is a target building in the three-dimensional virtual scene, a direction from a position of the virtual object to a position of the target building is determined in a ground coordinate system of the three-dimensional virtual scene as the lens orientation.

The virtual movement track further includes a plurality of normal control nodes which divide the virtual movement track into a plurality of sub-tracks, each sub-track of the plurality of sub-tracks corresponding to a reference priority. Before the acquiring a lens orientation corresponding to the lens movement object in operation C3, the method further includes:
A sub-track where the lens movement control node is located is selected from the plurality of sub-tracks as a target sub-track.

Exemplarily, the first sub-track, the second sub-track, the third sub-track, and the fourth sub-track in the above embodiments are taken as examples for illustration. As shown in Table 1, each sub-track corresponds to a reference priority in advance.

**Table 1**

| Sub-track identifier | Reference priority |
|---|---|
| First sub-track | N1 |
| Second sub-track | N2 |
| Third sub-track | N3 |
| Fourth sub-track | N4 |

For example, when it is detected that the sub-track where the lens movement control node reached by the virtual object is located is the first sub-track, the first sub-track may be used as the target sub-track.

A reference priority corresponding to the target sub-track and a priority of the lens movement object are acquired.

Following the above examples, the reference priority N1 corresponding to the first sub-track can be found from Table 1. Different lens movement objects are pre-associated with different priorities. For example, the priority of the current lens movement object may be M.

The priority of the lens movement object is compared with the reference priority.

Following the above examples, the priority M of the current lens movement object may be compared with the reference priority N1 to determine whether the priority M of the current lens movement object is greater than or equal to the reference priority N1.

When the priority of the lens movement object is greater than or equal to the reference priority, the operation of acquiring a lens orientation corresponding to the lens movement object is performed.

Following the above examples, if the priority M of the current lens movement object is greater than or equal to the reference priority N1, a subsequent operation of acquiring a lens orientation corresponding to the lens movement object may be performed to continue the lens movement operation for the lens movement object. If the priority M of the current lens movement object is less than the reference priority N1, the lens movement operation for the lens movement object may be canceled.

A reference priority corresponding to each sub-track is positively correlated with a distance from the sub-track to a starting point of the virtual movement track.

Following the above examples of Table 1, in Table 1, the reference priority N1 is greater than the reference priority N2, the reference priority N2 is greater than the reference priority N3, and the reference priority N3 is greater than the reference priority N4. That is, for the same lens movement object, the later in the movement track playback, the more difficult it is to trigger the lens movement operation.

Considering that at the latter part of the movement track playback, the frequency of reaching lens movement control nodes significantly increases due to the higher movement speed of the virtual object, which may affect the user's experience of viewing the playback. In this implementation, lens movement objects are assigned priorities, and reference priorities are set for sub-tracks in different segments of the virtual movement track. Whether to perform a lens movement operation is determined by comparing the priority with the reference priority, thereby ensuring that the number of lens movement operations triggered in each sub-track remains within an appropriate range and does not affect the user's viewing experience.

In some embodiments, for each sub-track, an upper limit may be set on the number of lens movement operations that can be triggered corresponding to the sub-track. During track playback, if the number of lens movement operations triggered by the virtual object within the sub-track reaches the upper limit, no further lens movement operations are performed.

In some embodiments, in the virtual movement track, if the track length between the current lens movement control node and the previous lens movement control node is less than or equal to a specified track length, the current lens movement control node does not trigger a lens movement operation.

In some embodiments, in the virtual movement track, if the interval duration between the current lens movement control node and the previous lens movement control node is less than or equal to a specified duration, the current lens movement control node does not trigger a lens movement operation.

C4: Control, based on the lens orientation, the virtual lens to capture the image of the virtual object moving along the virtual movement track.

Exemplarily, in an example where the virtual object is a vehicle, the default initial lens orientation of the virtual lens is along the route direction of the vehicle's current movement path. When the lens movement object is detected as an intersection in the three-dimensional virtual scene, the movement direction of the vehicle may be determined as the lens orientation. When the vehicle passes through the intersection, the virtual lens is gradually switched from the initial lens orientation to the lens orientation, and when the vehicle exits the intersection, the lens orientation of the virtual lens is switched back to the initial lens orientation. The movement direction of the vehicle can be regarded as the heading direction of the vehicle. The route direction is road-related and is independent of the movement direction of the vehicle.

As an example, as shown in FIG. 6, in the virtual movement track, when the virtual object is 200 meters from entering an intersection (lens movement start node), the lens orientation may begin to switch to the movement direction of the virtual object. When the virtual object is 200 meters past the intersection (lens movement end node) in the virtual movement track, the lens orientation may begin to switch to the initial lens orientation.

In some implementations, each lens movement control node in the virtual movement track may be pre-associated with a set of control parameters. When the virtual object reaches a lens movement control node, the virtual lens may be controlled using not only the lens orientation corresponding to the lens movement control node but also the control parameters corresponding to the lens movement control node, and the movement speed of the virtual object may be controlled. For example, when the virtual object enters an intersection, the map scale of the virtual lens may be adjusted to 1:1, and the virtual lens angle may be adjusted to -20°.

205: Display the image.

In this embodiment, a three-dimensional virtual scene is acquired, and a real movement track of a real object is determined. Then, the real movement track is mapped to the three-dimensional virtual scene to obtain a virtual movement track. Thereafter, in the three-dimensional virtual scene, a virtual object corresponding to the real object and a virtual lens corresponding to the virtual object are set, a preset relative positional relationship between the virtual lens and the virtual object being maintained. Subsequently, the virtual object is controlled to move along the virtual movement track, and the virtual lens is controlled to capture an image of the virtual object moving along the virtual movement track. Finally, the image is displayed. Since the preset relative positional relationship between the virtual lens and the virtual object is maintained in the three-dimensional virtual scene, when the virtual object moves along the virtual movement track, the virtual lens can follow the virtual object to move in real time and capture an image of the surrounding environment of the virtual object during the movement. As the image is captured in the three-dimensional virtual scene, the captured image can be presented in a three-dimensional form, allowing the map elements in the three-dimensional virtual scene to be displayed with enhanced detail and richness, and accurately reconstructing the real movement track. Moreover, it enables the user to immerse themselves and realistically experience their prior movement process in reality, thereby improving the user's experience when viewing the movement track playback.

According to the methods described in the above embodiments, further details are described below.

In this embodiment, the method of the embodiments of this application is described in detail using an electronic device as an example.

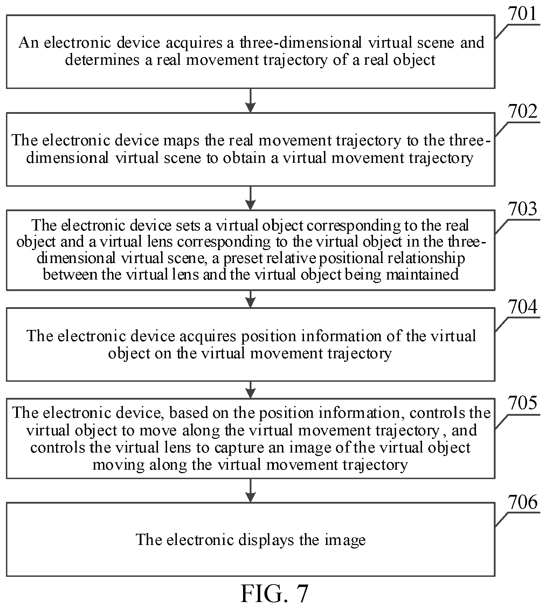

As shown in FIG. 7, a specific flow of a movement track playback method is as follows:
701: The electronic device acquires a three-dimensional virtual scene and determines a real movement track of a real object.

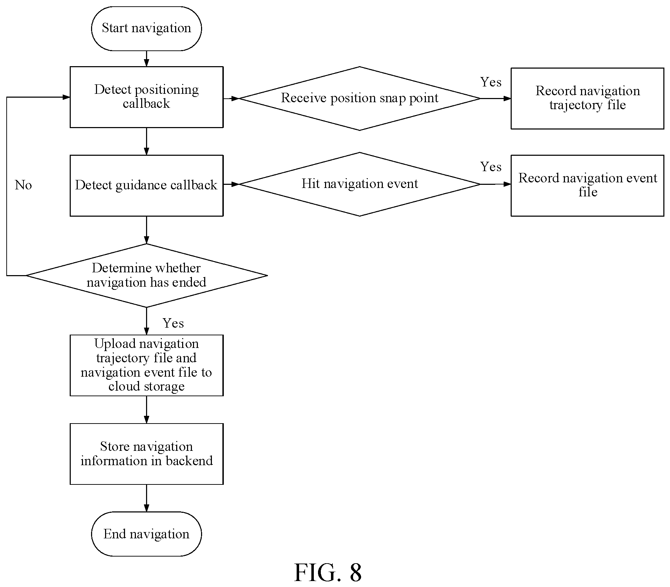

Exemplarily, the method for acquiring driving data may be as shown in FIG. 8.

During the actual vehicle navigation movement process, after navigation has started, a positioning callback can be detected. The positioning callback detection refers to setting a callback function or delegate when using a positioning service, which is automatically invoked upon a change in the positioning result to update the position information, thereby enabling real-time acquisition of the positioning information of the vehicle. The positioning information may include longitude, latitude, altitude, and the like. The accuracy of the positioning information can be custom-set, for example, to six decimal places.

Upon determining that a positioning snap point has been received, that is, upon receiving an instruction to record the current positioning information, the current positioning information is recorded into the navigation track file.

In addition, a guidance callback can be detected simultaneously to determine whether a navigation event is triggered. The navigation event may be a preset event, such as arriving at an intersection or passing a special building. When it is determined that a navigation event has been triggered, the event information is recorded into the navigation event file. In some embodiments, the event information may be included.

Thereafter, it is determined whether the navigation has ended. If so, the navigation event file and the navigation track file are uploaded to cloud storage. Navigation information is then obtained based on the navigation event file and the navigation track file, and the navigation information for the current navigation is stored in the backend to acquire driving data. The navigation is subsequently ended. The navigation information may include the start location, destination, speed, positioning information, data accuracy, and other information about the current navigation. If the navigation has not ended, the process performs the operation of detecting the positioning callback.

The driving data obtained as described above may be configured not only for movement track playback but also for other scenarios, such as augmented reality (AR) human-machine interaction, which are not limited thereto.

702: The electronic device maps the real movement track to the three-dimensional virtual scene to obtain a virtual movement track.

703: The electronic device sets a virtual object corresponding to the real object and a virtual lens corresponding to the virtual object in the three-dimensional virtual scene, a preset relative positional relationship between the virtual lens and the virtual object being maintained.

704: The electronic device acquires position information of the virtual object on the virtual movement track.

705: The electronic device, based on the position information, controls the virtual object to move along the virtual movement track, and controls the virtual lens to capture an image of the virtual object moving along the virtual movement track.

The controlling, based on the position information, the virtual object to move along the virtual movement track may include: According to the position information, a remaining track length of the virtual object is determined, the remaining track length being a length of the virtual movement track along which the virtual object has not moved. According to the remaining track length, a target movement speed of the virtual object is determined, the remaining track length being negatively correlated with the target movement speed. Based on the target movement speed, the virtual object is controlled to move along the virtual movement track.

The controlling, based on the position information, the virtual lens to capture the image of the virtual object moving along the virtual movement track further includes: According to the remaining track length, a target virtual lens angle of the virtual lens is determined, where the remaining track length is positively correlated with the target virtual lens angle, the target virtual lens angle being a pitch angle of the virtual lens, and the target virtual lens angle ranging from -90 degrees to 0 degrees. Based on the target virtual lens angle, the virtual lens is controlled to capture the image of the virtual object moving along the virtual movement track.

The controlling, based on the position information, the virtual lens to capture the image of the virtual object moving along the virtual movement track includes: According to the remaining track length, a target map scale corresponding to the virtual lens is determined, the target map scale being positively correlated with the remaining track length. Based on the target map scale, the virtual lens is controlled to capture the image of the virtual object moving along the virtual movement track.

In some implementations, the virtual movement track includes a plurality of control nodes. The based on the position information, controlling the virtual object to move along the virtual movement track, and controlling the virtual lens to capture the image of the virtual object moving along the virtual movement track includes: When it is determined, according to the position information, that the virtual object has arrived at a control node, a control strategy corresponding to the control node is acquired. Based on the control strategy corresponding to the control node, the virtual object is controlled to move along the virtual movement track, and the virtual lens is controlled to capture the image of the virtual object moving along the virtual movement track.

The based on the control strategy corresponding to the control node, controlling the virtual object to move along the virtual movement track, and controlling the virtual lens to capture the image of the virtual object moving along the virtual movement track includes: A type of the control node is acquired. When the control node is a normal control node, control parameters corresponding to the normal control node are acquired, the control parameters including a movement speed of the virtual object, a virtual lens angle of the virtual lens, and a map scale corresponding to the virtual lens, the virtual lens angle being a pitch angle of the virtual lens, and the virtual lens angle ranging from -90 degrees to 0 degrees. Based on the movement speed, the virtual object is controlled to move along the virtual movement track. Based on the virtual lens angle and the map scale, the virtual lens is controlled to capture the image of the virtual object moving along the virtual movement track.

The normal control node includes a first control node, a second control node, and a third control node, and the first control node, the second control node, and the third control node divide the virtual movement track into a first sub-track, a second sub-track, a third sub-track, and a fourth sub-track. The first sub-track is a track between the first control node and a starting point of the virtual movement track. The second sub-track is a track between the first control node and the second control node. The third sub-track is a track between the second control node and the third control node. The fourth sub-track is a track between the third control node and an end point of the virtual movement track. A ratio of track lengths of the first sub-track, the second sub-track, the third sub-track, and the fourth sub-track is 2:1:2:5.

Control parameters corresponding to the first control node include a first movement speed, a first virtual lens angle, and a first map scale. Control parameters corresponding to the second control node include a second movement speed, a second virtual lens angle, and a second map scale. Control parameters corresponding to the third control node include a third movement speed, a third virtual lens angle, and a third map scale. The first movement speed is less than the second movement speed, and the second movement speed is less than the third movement speed. The first virtual lens angle is greater than or equal to the second virtual lens angle, and the second virtual lens angle is greater than the third virtual lens angle. The first map scale is greater than the second map scale, and the second map scale is greater than the third map scale.

The based on the control strategy corresponding to the control node, controlling the virtual object to move along the virtual movement track, and controlling the virtual lens to capture the image of the virtual object moving along the virtual movement track includes: A type of the control node is acquired. When the control node is a lens movement control node, a lens movement object corresponding to the lens movement control node is determined. A lens orientation corresponding to the lens movement object is acquired. Based on the lens orientation, the virtual lens is controlled to capture the image of the virtual object moving along the virtual movement track.

The acquiring a lens orientation corresponding to the lens movement object includes: When it is detected that the lens movement object is an intersection in the three-dimensional virtual scene, a movement direction of the virtual object is determined as the lens orientation. The acquiring a lens orientation corresponding to the lens movement object includes: When it is detected that the lens movement object is a target building in the three-dimensional virtual scene, a direction from a position of the virtual object to a position of the target building is determined in a ground coordinate system of the three-dimensional virtual scene as the lens orientation.

The virtual movement track further includes a plurality of normal control nodes which divide the virtual movement track into a plurality of sub-tracks, each sub-track of the plurality of sub-tracks corresponding to a reference priority. Before the acquiring a lens orientation corresponding to the lens movement object, the method further includes: A sub-track where the lens movement control node is located is selected from the plurality of sub-tracks as a target sub-track.

A reference priority corresponding to the target sub-track and a priority of the lens movement object are acquired. The priority of the lens movement object is compared with the reference priority. When the priority of the lens movement object is greater than or equal to the reference priority, the operation of acquiring a lens orientation corresponding to the lens movement object is performed. A reference priority corresponding to each sub-track is positively correlated with a distance from the sub-track to a starting point of the virtual movement track.

706: The electronic device displays the image.

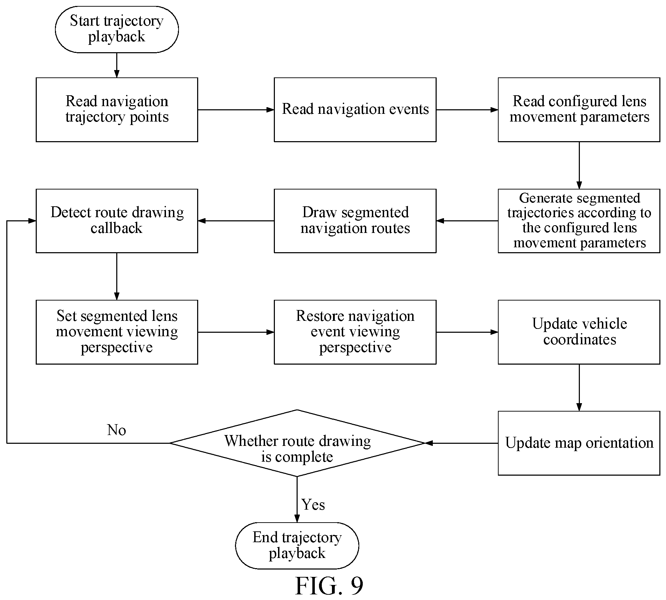

Exemplarily, in combination with the above operations 701 to 706, a specific implementation flow of the electronic device performing movement track playback may be as shown in FIG. 9.

After starting the movement track playback, the navigation track points, navigation events, and configured lens movement parameters are read. The navigation track points may be read from the above navigation track file, the navigation events may be read from the above navigation event file, and the configured lens movement parameters may be custom-set by the user. The configured lens movement parameter may correspond to the above control parameters.

Then, according to the configured lens movement parameters, segmented tracks are generated, such as the first sub-track and the second sub-track as described above.

Thereafter, a segmented navigation route drawing callback is executed, that is, whether a navigation event is triggered in the track drawing process is detected, and when triggered, a segmented lens movement viewing perspective is set, and the navigation event viewing perspective is restored through the segmented lens movement viewing perspective.

Moreover, the vehicle coordinates and the displayed map orientation are updated, where the map orientation may correspond to the lens orientation described in the above embodiments.

Subsequently, it may be determined whether the navigation route drawing is complete. If so, the movement track playback is ended; if not, the process performs the operation of detecting the route drawing callback.

As a more specific example, the track to be played back may be divided into four segments, such as a first segment, a second segment, a third segment, and a fourth segment. In some embodiments, the navigation distance range supported by the movement track playback may be 0 to 50 kilometers. The total playback duration of the movement track playback may be controlled within 7 to 30 seconds. The movement track playback speed (e.g., the movement speed of the above virtual object) may be classified as slow speed, medium speed, or fast speed, where the slow speed is 500 m/s, the medium speed is 2000 m/s, and the fast speed is 5000 m/s.

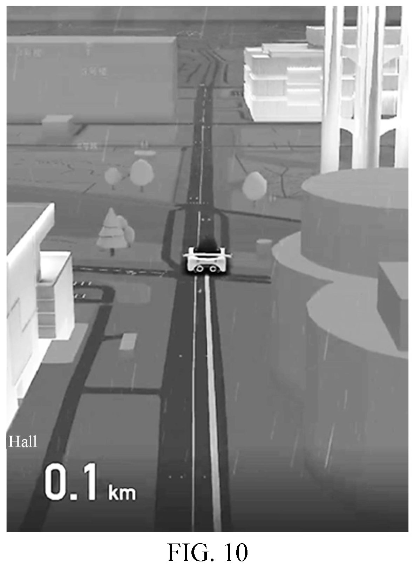

For the first segment of the track to be played back, it may correspond to 0 to 20% of the track. In the first segment, the movement track playback speed may be set to slow speed, and the playback duration may range from 3 to 12 seconds. In addition, the playback image of the first segment may be as shown in FIG. 10. In the image, the map scale is level 18 (e.g., each unit length on the map represents 10 meters on the ground), the map pitch angle is 80°, and the map orientation corresponds to the route orientation of the vehicle's current movement path. The map pitch angle may correspond to the virtual lens angle in the above embodiments. The map pitch angle *a* may have the following relationship with the virtual lens angle β in the above embodiments: a = (90° + β). For example, a map pitch angle of 0° corresponds to a virtual lens angle of -90°, a map pitch angle of 90° corresponds to a virtual lens angle of 0°, and a map pitch angle of 70° corresponds to a virtual lens angle of -20°.

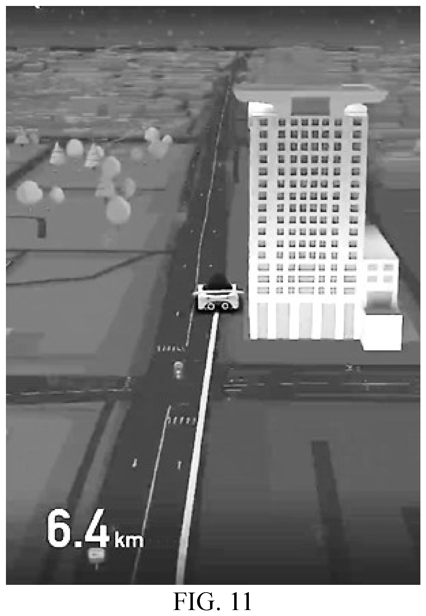

For the second segment of the track to be played back, it may correspond to 20% to 30% of the track. In the second segment, the movement track playback speed may be set to slow speed, and the playback duration may range from 2 to 8 seconds. In addition, the playback image of the second segment may be as shown in FIG. 11. In the image, the map scale is level 17 (e.g., each unit length on the map represents 20 meters on the ground), the map pitch angle is 70°, and the map orientation corresponds to the route orientation of the vehicle's current movement path. Compared with the first segment, the image content displayed in the second segment is more concise.

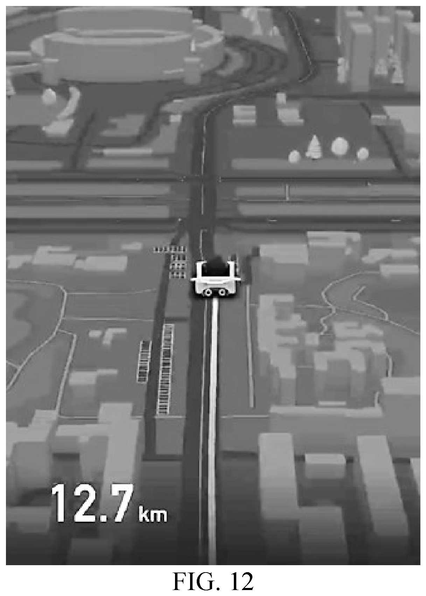

For the third segment of the track to be played back, it may correspond to 30% to 50% of the track. In the third segment, the movement track playback speed may be set to medium speed, and the playback duration may range from 1 to 5 seconds. In addition, the playback image of the third segment may be as shown in FIG. 12. In the image, the map scale is level 16 (e.g., each unit length on the map represents 50 meters on the ground), the map pitch angle is 70°, and the map orientation corresponds to the route orientation of the vehicle's current movement path. Compared with the second segment, the image content displayed in the third segment is more concise, and the buildings in the image are less detailed than those in the second segment.

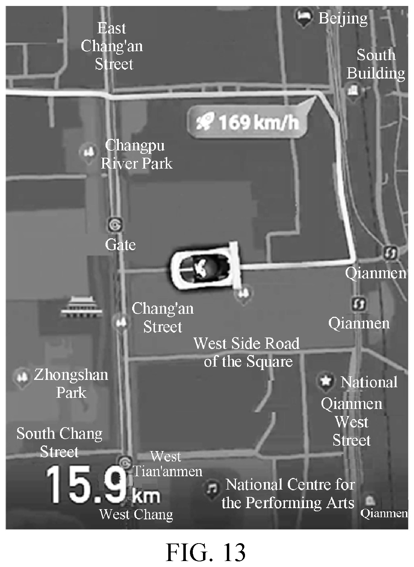

For the fourth segment of the track to be played back, it may correspond to 50% to 100% of the track. In the fourth segment, the movement track playback speed may be set to fast speed, and the playback duration may range from 1 to 5 seconds. In addition, the playback image of the fourth segment may be as shown in FIG. 13. In the image, the map scale is level 15 (e.g., each unit length on the map represents 100 meters on the ground), and the map pitch angle is 0°. In some embodiments, the vehicle's speed and current travel distance may be displayed in the playback image.

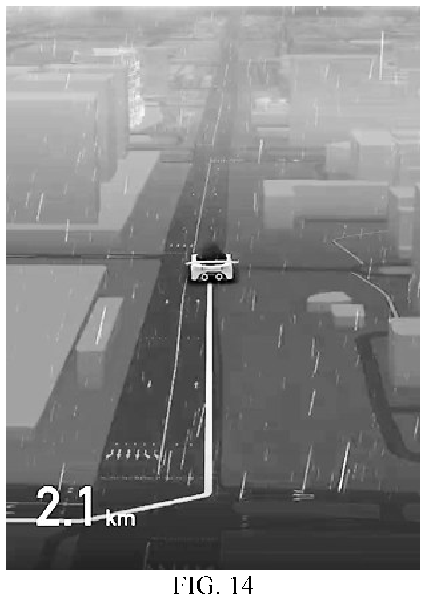

As an example, when the playback reaches the point where the vehicle passes an intersection (e.g., exits the intersection), the playback image may be as shown in FIG. 14. In the image, the map scale is level 21 (e.g., each unit length on the map represents 1 meter on the ground), the map pitch angle is 80°, and through corresponding lens movement processing, the map orientation can be set to the heading direction of the vehicle. In some embodiments, as shown in FIG. 14, corresponding weather elements may be displayed in the playback image according to the weather information obtained from the driving data. For example, rainy weather elements may be displayed on the map.

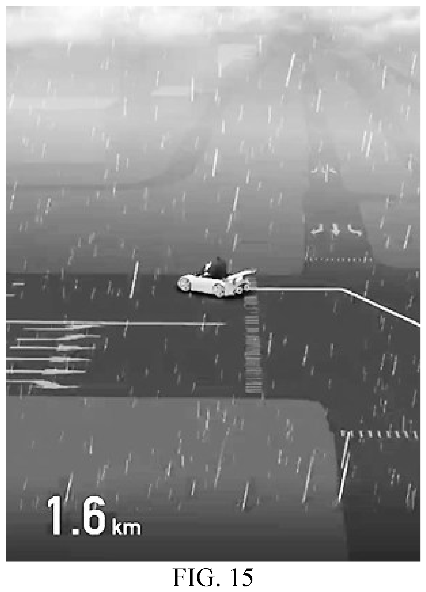

In some embodiments, as shown in FIG. 15, when the playback reaches the point where the vehicle is turning at an intersection, the lens orientation may be adjusted toward the corner of the intersection to observe the vehicle's turning process.

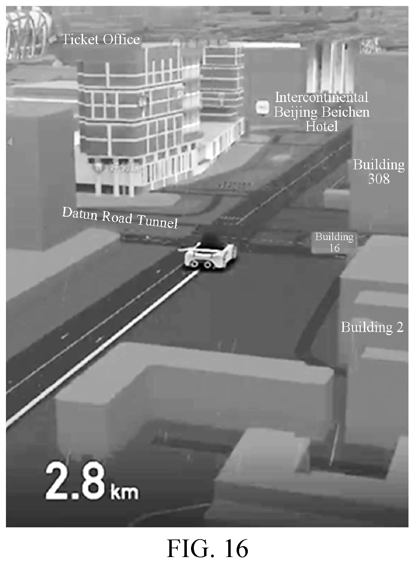

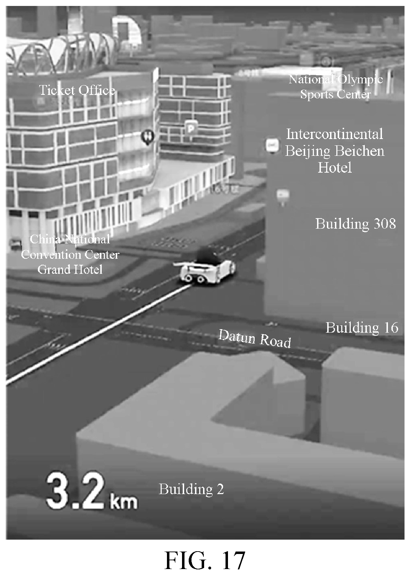

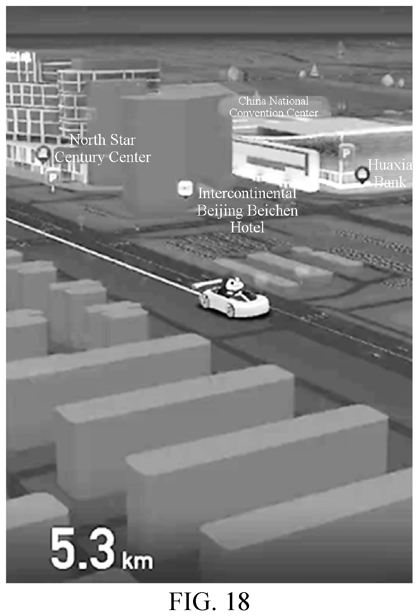

In some implementations, when the playback reaches the point where the vehicle passes a special building requiring lens movement, the map scale and map pitch angle may remain unchanged, and the lens orientation may be kept aligned with the direction from the vehicle's current position to the position of the special building. Exemplarily, as shown in FIG. 16, when the vehicle is approaching the special building, the special building may appear at the front-left of the vehicle in the displayed playback image; as shown in FIG. 17, when the vehicle is passing the special building, the special building may appear at the left side of the vehicle in the displayed playback image; and as shown in FIG. 18, after the vehicle has passed the special building, the special building may appear at the rear-left of the vehicle in the displayed playback image. By displaying the series of images described above, a surround-view effect of the special building can be achieved.

The lens movement operation may start when the vehicle begins to pass the special building and automatically end after a specified duration (e.g., 2 seconds).

For the lens movement object, other lens movement methods may be employed in addition to the above lens movement methods, such as having the virtual lens circle around the special building, which are not limited thereto.

In this embodiment, by performing movement track playback in an immersive manner in the three-dimensional virtual scene, the map elements are displayed in a more detailed and enriched manner. The track is controlled using a segmentation strategy, with the playback speed and playback duration of each segment dynamically configured and calculated. Moreover, the map scale, pitch angle, and orientation are dynamically adjusted according to the road segment of the vehicle's route. For example, during the first half of the playback, more lens movement effects are presented to enhance immersion in the field of view, with a relatively slower playback speed to enhance the user's viewing experience; during the latter half, the playback speed is increased to avoid visual fatigue for the user. Special virtual lens viewpoints may be set for key navigation scenes, such as intersections and special landmark buildings for display, thereby presenting the details of the special landmark buildings and reconstructing the real navigation scenario for the user. This can address the problem in the related art where the field of view, map scale, and pitch angle during movement track playback are fixed, the map orientation is static, and the vehicle movement is mostly played back in a two-dimensional plane, making it difficult to observe the details of surrounding map elements during navigation and failing to accurately reconstruct the user's real navigation scenario, resulting in a suboptimal viewing experience. Consequently, the user's experience of viewing the movement track playback is improved.

To better implement the above method, the embodiments of this application further provide a movement track playback apparatus. The movement track playback apparatus can be specifically integrated into an electronic device, which may be a terminal, a server, or the like. The terminal may be a mobile phone, a tablet computer, a smart Bluetooth device, a laptop, a PC, or the like. The server may be a single server or a server cluster including a plurality of servers.

For example, in this embodiment, the method of the embodiments of this application is described in detail in an example where the movement track playback apparatus is specifically integrated into the movement track playback.

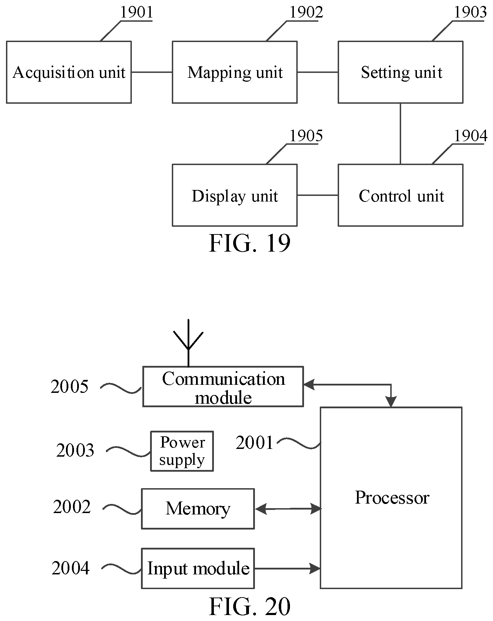

For example, as shown in FIG. 19, the movement track playback apparatus may include an acquisition unit 1901, a mapping unit 1902, a setting unit 1903, a control unit 1904, and a display unit 1905 as follows:
The acquisition unit 1901 is configured to acquire a three-dimensional virtual scene and determine a real movement track of a real object.

The mapping unit 1902 is configured to map the real movement track to the three-dimensional virtual scene to obtain a virtual movement track.

The setting unit 1903 is configured to set, in the three-dimensional virtual scene, a virtual object corresponding to the real object and a virtual lens corresponding to the virtual object, a preset relative positional relationship between the virtual lens and the virtual object being maintained.

The control unit 1904 is configured to control the virtual object to move along the virtual movement track, and control the virtual lens to capture an image of the virtual object moving along the virtual movement track.

The display unit 1905 is configured to display the image.

In some implementations, the control unit 1904 includes:
a position acquisition sub-unit, configured to acquire position information of the virtual object on the virtual movement track; and
a control sub-unit, configured to, based on the position information, control the virtual object to move along the virtual movement track, and control the virtual lens to capture an image of the virtual object moving along the virtual movement track.

In some implementations, the control sub-unit is specifically configured to:
determine, according to the position information, a remaining track length of the virtual object, the remaining track length being a length of the virtual movement track along which the virtual object has not moved;
determine, according to the remaining track length, a target movement speed of the virtual object, the remaining track length being negatively correlated with the target movement speed; and
control, based on the target movement speed, the virtual object to move along the virtual movement track.

In some implementations, the control sub-unit is further specifically configured to:
determine, according to the remaining track length, a target virtual lens angle of the virtual lens, the remaining track length being positively correlated with the target virtual lens angle, the target virtual lens angle being a pitch angle of the virtual lens, and the target virtual lens angle ranging from -90 degrees to 0 degrees; and
control, based on the target virtual lens angle, the virtual lens to capture the image of the virtual object moving along the virtual movement track.

In some implementations, the control sub-unit is further specifically configured to:
determine, according to the remaining track length, a target map scale corresponding to the virtual lens, the target map scale being positively correlated with the remaining track length; and
control, based on the target map scale, the virtual lens to capture the image of the virtual object moving along the virtual movement track.

In some implementations, the virtual movement track includes a plurality of control nodes, and the control sub-units includes:
a strategy acquisition module, configured to, when it is determined, according to the position information, that the virtual object has arrived at a control node, acquire a control strategy corresponding to the control node; and
a control module, configured to, based on the control strategy corresponding to the control node, control the virtual object to move along the virtual movement track, and control the virtual lens to capture an image of the virtual object moving along the virtual movement track.

In some implementations, the control module includes:
a type acquisition sub-module, configured to acquire a type of the control node;
a parameter acquisition sub-module, configured to, when the control node is a normal control node, acquire control parameters corresponding to the normal control node, the control parameters including a movement speed of the virtual object, a virtual lens angle of the virtual lens, and a map scale corresponding to the virtual lens, the virtual lens angle being a pitch angle of the virtual lens, and the virtual lens angle ranging from -90 degrees to 0 degrees;
a speed control sub-module, configured to control, based on the target movement speed, the virtual object to move along the virtual movement track; and
a first virtual lens control sub-module, configured to control, based on the virtual lens angle and the map scale, the virtual lens to capture the image of the virtual object moving along the virtual movement track.

In some implementations, the normal control node includes a first control node, a second control node, and a third control node, and the first control node, the second control node, and the third control node divide the virtual movement track into a first sub-track, a second sub-track, a third sub-track, and a fourth sub-track.

The first sub-track is a track between the first control node and a starting point of the virtual movement track.

The second sub-track is a track between the first control node and the second control node.

The third sub-track is a track between the second control node and the third control node.

The fourth sub-track is a track between the third control node and an end point of the virtual movement track.

A ratio of track lengths of the first sub-track, the second sub-track, the third sub-track, and the fourth sub-track is 2:1:2:5.

In some implementations, control parameters corresponding to the first control node include a first movement speed, a first virtual lens angle, and a first map scale.

Control parameters corresponding to the second control node include a second movement speed, a second virtual lens angle, and a second map scale.

Control parameters corresponding to the third control node include a third movement speed, a third virtual lens angle, and a third map scale.

The first movement speed is less than the second movement speed, and the second movement speed is less than the third movement speed.

The first virtual lens angle is greater than or equal to the second virtual lens angle, and the second virtual lens angle is greater than the third virtual lens angle.

The first map scale is greater than the second map scale, and the second map scale is greater than the third map scale.

In some implementations, the control module includes:
a type acquisition sub-module, configured to acquire a type of the control node;
an object determination sub-module, configured to, when the control node is a lens movement control node, determine a lens movement object corresponding to the lens movement control node;
an orientation acquisition sub-module, configured to acquire a lens orientation corresponding to the lens movement object; and
a second virtual lens control sub-module, configured to control, based on the lens orientation, the virtual lens to capture the image of the virtual object moving along the virtual movement track.

In some implementations, the orientation acquisition sub-module is specifically configured to:
when it is detected that the lens movement object is an intersection in the three-dimensional virtual scene, determine a movement direction of the virtual object as the lens orientation.

In some implementations, the orientation acquisition sub-module is specifically configured to:
when it is detected that the lens movement object is a target building in the three-dimensional virtual scene, determine, in a ground coordinate system of the three-dimensional virtual scene, a direction from a position of the virtual object to a position of the target building as the lens orientation.

In some implementations, the virtual movement track further includes a plurality of normal control nodes which divide the virtual movement track into a plurality of sub-tracks, each sub-track of the plurality of sub-tracks corresponding to a reference priority. The apparatus further includes:
a selection unit, configured to select, from the plurality of sub-tracks, a sub-track where the lens movement control node is located as a target sub-track;
a priority acquisition unit, configured to acquire a reference priority corresponding to the target sub-track and a priority of the lens movement object;
a priority comparison unit, configured to compare the priority of the lens movement object with the reference priority; and
an execution unit, configured to, when the priority of the lens movement object is greater than or equal to the reference priority, perform the operation of acquiring a lens orientation corresponding to the lens movement object.

In some implementations, a reference priority corresponding to each sub-track is positively correlated with a distance from the sub-track to a starting point of the virtual movement track.

In specific implementations, the above units may be implemented as an independent entity, or may be arbitrarily combined and implemented as the same entity or a plurality of entities. The specific implementations of the above units can refer to the foregoing method embodiments and are not repeated herein.

The embodiments of this application further provide an electronic device, which may be a terminal, a server, or the like. The terminal may be a mobile phone, a tablet computer, a smart Bluetooth device, a laptop, a PC, or the like. The server may be a single server, a server cluster including a plurality of servers, or the like.

In some embodiments, the movement track playback apparatus may further be integrated into a plurality of electronic devices. For example, the movement track playback apparatus may be integrated into a plurality of servers, and the movement track playback method of this application may be implemented by the plurality of servers.

In this embodiment, a detailed description is provided for the electronic device. For example, as shown in FIG. 20, a schematic structural diagram of an electronic device involved in the embodiments of this application is shown.

In particular, the electronic device may include components such as a processor 2001 including one or more processing cores, a memory 2002 including one or more computer-readable storage media, a power supply 2003, an input module 2004, and a communication module 2005. A person skilled in the art can understand that the structure of the electronic device shown in FIG. 20 does not constitute a limit to the electronic device. The server may include more or fewer parts than those shown in the figure, may combine some parts, or may have different part arrangements.

The processor 2001 serves as the control center of the electronic device, connecting various parts of the electronic device via a plurality of interfaces and circuits. By running or executing software programs and/or modules stored in the memory 2002, and by accessing data stored in the memory 2002, the processor performs various functions and processes data, thereby enabling overall monitoring of the electronic device. In some embodiments, the processor 2001 may include one or more processing cores. In some embodiments, the processor 2001 may integrate an application processor and a modem processor, where the application processor primarily handles the operating system, user interface, application programs, and the like, while the modem processor primarily handles wireless communications. The modem processor may not be integrated into the processor 2001.

The memory 2002 may be configured to store software programs and modules. The processor 2001 executes various functional applications and performs data processing by running the software programs and modules stored in the memory 2002. The memory 2002 may mainly include a program storage area and a data storage area. The program storage area may store an operating system, at least one application program required for a function (e.g., audio playback function and image playback function), and the like. The data storage area may store data generated according to the use of the electronic device, and the like. In addition, the memory 2002 may include high-speed random-access memory, and may further include non-volatile memory, such as at least one magnetic storage device, flash memory device, or other non-volatile solid-state memory device. Accordingly, the memory 2002 may further include a memory controller for enabling the processor 2001 to access the memory 2002.

The electronic device further includes the power supply 2003 for supplying power to the components. In some embodiments, the power supply 2003 may be logically connected to the processor 2001 via a power management system, thereby enabling the management of functions such as charging, discharging, and power consumption via the power management system. The power supply 2003 may further include one or more components, such as a direct current (DC) or alternating current (AC) power source, a recharging system, a power failure detection circuit, a power converter or inverter, a power status indicator, and the like.

The electronic device may further include an input module 2004, which may be configured to receive digital or character input and to generate signals related to user settings and function control, such as inputs from a keyboard, mouse, joystick, optical device, or trackball.

The electronic device may further include a communication module 2005. In some embodiments, the communication module 2005 may include a wireless module, enabling the electronic device to perform short-range wireless transmissions via the wireless module of the communication module 2005 and thereby providing the user with wireless broadband Internet access. For example, the communication module 2005 may be configured to assist the user in sending and receiving e-mails, browsing web pages, accessing streaming media, and the like.

Although not shown, the electronic device may further include a display unit and other components, which are not repeated herein. In particular, in this embodiment, the processor 2001 of the electronic device loads the executable files corresponding to one or more application program processes into the memory 2002 according to the following instructions, and executes the application programs stored in the memory 2002, thereby implementing various functions.

The specific implementation of the above operations may refer to the foregoing embodiments and are not repeated herein.

A person of ordinary skill in the art can understand that all or part of the operations in various methods of the embodiments may be performed by instructions, or by instructions controlling relevant hardware. The instructions may be stored in a computer-readable storage medium and loaded and executed by the processor.

Accordingly, the embodiments of this application further provide a computer-readable storage medium having a plurality of instructions stored therein, the instructions being loadable by a processor to execute the operations of the movement track playback method according to any one of the embodiments of this application.

The storage medium may include a read-only memory (ROM), a random-access memory (RAM), a disk, an optical disk, or the like.

According to one aspect of this application, a computer program product or a computer program is provided, the computer program product or the computer program including computer instructions. The computer instructions are stored in a computer-readable storage medium. The processor of the electronic device reads the computer instructions from the computer-readable storage medium and executes the computer instructions, enabling the electronic device to perform the methods according to the above embodiments.

Since the instructions stored in the storage medium can execute the operations of the movement track playback method according to any one of the embodiments of this application, the beneficial effects achievable by the movement track playback method according to any one of the embodiments of this application can thus be realized. For details, reference may be made to the foregoing embodiments, which are not repeated herein.

Technical features of the foregoing embodiments may be combined in different manners to form other embodiments. For the sake of conciseness, not all possible combinations of the technical features in the above embodiments are described. However, as long as the combination of these technical features does not result in a conflict, it is to be considered within the scope of this specification.

The foregoing embodiments merely illustrate several implementations of this application, which are described in a specific and detailed manner, but cannot be construed as limiting the scope of the present disclosure. For a person of ordinary skill in the art, several transformations and improvements can be made without departing from the idea of this application. These transformations and improvements belong to the protection scope of this application. Therefore, the scope of protection of this application is to be defined by the appended claims.

## Claims

1. A movement track playback method, the method being executable by an electronic device and comprising:
determining a real movement track of a real object;
determining a three-dimensional virtual scene;
mapping the real movement track to the three-dimensional virtual scene to obtain a virtual movement track;
determining, in the three-dimensional virtual scene, a virtual object representing the real object and a virtual lens for capturing an image of the virtual object, the virtual lens being kept in a preset relative positional relationship with the virtual object;
controlling the virtual object to move along the virtual movement track, and controlling the virtual lens to capture the image of the virtual object moving along the virtual movement track; and
displaying the image of the virtual object.

2. The movement track playback method according to claim 1, wherein the controlling the virtual object to move along the virtual movement track, and controlling the virtual lens to capture the image of the virtual object moving along the virtual movement track comprises:
determining position information of the virtual object on the virtual movement track; and
controlling, based on the position information, the virtual object to move along the virtual movement track, and controlling the virtual lens to capture the image of the virtual object moving along the virtual movement track.

3. The movement track playback method according to claim 2, wherein the controlling, based on the position information, the virtual object to move along the virtual movement track comprises:
determining, according to the position information, a remaining track length of the virtual object, the remaining track length being a length of the virtual movement track along which the virtual object has not moved;
determining, according to the remaining track length, a target movement speed of the virtual object, the remaining track length being negatively correlated with the target movement speed; and
controlling, based on the target movement speed, the virtual object to move along the virtual movement track.

4. The movement track playback method according to claim 3, wherein the controlling, based on the position information, the virtual lens to capture the image of the virtual object moving along the virtual movement track comprises:
determining, according to the remaining track length, a target virtual lens angle of the virtual lens, the remaining track length being positively correlated with the target virtual lens angle, and the target virtual lens angle being a pitch angle of the virtual lens; and
controlling, based on the target virtual lens angle, the virtual lens to capture the image of the virtual object moving along the virtual movement track.

5. The movement track playback method according to claim 3, wherein the controlling, based on the position information, the virtual lens to capture the image of the virtual object moving along the virtual movement track comprises:
determining, according to the remaining track length, a target map scale corresponding to the virtual lens, the target map scale being positively correlated with the remaining track length; and
controlling, based on the target map scale, the virtual lens to capture the image of the virtual object moving along the virtual movement track.

6. The movement track playback method according to claim 2, wherein the virtual movement track comprises a plurality of control nodes, and the controlling, based on the position information, the virtual object to move along the virtual movement track, and controlling the virtual lens to capture the image of the virtual object moving along the virtual movement track comprises:
when it is determined, according to the position information, that the virtual object has arrived at a control node, determining a control strategy corresponding to the control node; and
based on the control strategy corresponding to the control node, controlling the virtual object to move along the virtual movement track, and controlling the virtual lens to capture the image of the virtual object moving along the virtual movement track.

7. The movement track playback method according to claim 6, wherein the based on the control strategy corresponding to the control node, controlling the virtual object to move along the virtual movement track, and controlling the virtual lens to capture the image of the virtual object moving along the virtual movement track comprises:
determining a type of the control node;
when the control node is a normal control node, determining control parameters corresponding to the normal control node, the control parameters comprising a movement speed of the virtual object, a virtual lens angle of the virtual lens, and a map scale corresponding to the virtual lens, and the virtual lens angle being a pitch angle of the virtual lens;
controlling, based on the movement speed, the virtual object to move along the virtual movement track; and
controlling, based on the virtual lens angle and the map scale, the virtual lens to capture the image of the virtual object moving along the virtual movement track.

8. The movement track playback method according to claim 7, wherein the normal control node comprises a first control node, a second control node, and a third control node, and the first control node, the second control node, and the third control node divide the virtual movement track into a first sub-track, a second sub-track, a third sub-track, and a fourth sub-track;
the first sub-track is a track between the first control node and a starting point of the virtual movement track;
the second sub-track is a track between the first control node and the second control node;
the third sub-track is a track between the second control node and the third control node; and the fourth sub-track is a track between the third control node and an end point of the virtual movement track.

9. The movement track playback method according to claim 8, wherein a ratio of track lengths of the first sub-track, the second sub-track, the third sub-track, and the fourth sub-track is 2:1:2:5.

10. The movement track playback method according to claim 8 or 9, wherein
control parameters corresponding to the first control node comprise a first movement speed, a first virtual lens angle, and a first map scale;
control parameters corresponding to the second control node comprise a second movement speed, a second virtual lens angle, and a second map scale;
control parameters corresponding to the third control node comprise a third movement speed, a third virtual lens angle, and a third map scale;
the first movement speed is less than the second movement speed, and the second movement speed is less than the third movement speed;
the first virtual lens angle is greater than or equal to the second virtual lens angle, and the second virtual lens angle is greater than the third virtual lens angle; and
the first map scale is greater than the second map scale, and the second map scale is greater than the third map scale.

11. The movement track playback method according to any one of claims 6 to 10, wherein the based on the control strategy corresponding to the control node, controlling the virtual object to move along the virtual movement track, and controlling the virtual lens to capture the image of the virtual object moving along the virtual movement track comprises:
determining a type of the control node;
when the control node is a lens movement control node, determining a lens movement object corresponding to the lens movement control node;
determining a lens orientation corresponding to the lens movement object; and
controlling, based on the lens orientation, the virtual lens to capture the image of the virtual object moving along the virtual movement track.

12. The movement track playback method according to claim 11, wherein the determining a lens orientation corresponding to the lens movement object comprises:
when it is detected that the lens movement object is an intersection in the three-dimensional virtual scene, determining a movement direction of the virtual object as the lens orientation.

13. The movement track playback method according to claim 11, wherein the determining a lens orientation corresponding to the lens movement object comprises:
when it is detected that the lens movement object is a target building in the three-dimensional virtual scene, determining, in a ground coordinate system of the three-dimensional virtual scene, a direction from a position of the virtual object to a position of the target building as the lens orientation.

14. The movement track playback method according to claim 11,
wherein the virtual movement track further comprises a plurality of normal control nodes which divide the virtual movement track into a plurality of sub-tracks, each sub-track of the plurality of sub-tracks corresponding to a reference priority; and
wherein before the determining a lens orientation corresponding to the lens movement object, the method further comprises:
selecting, from the plurality of sub-tracks, a sub-track where the lens movement control node is located as a target sub-track;
determining a reference priority corresponding to the target sub-track and a priority of the lens movement object;
comparing the priority of the lens movement object with the reference priority; and
performing, in response to the priority of the lens movement object being greater than or equal to the reference priority, the operation of determining a lens orientation corresponding to the lens movement object.

15. The movement track playback method according to claim 14, wherein a reference priority corresponding to each sub-track is positively correlated with a distance from the sub-track to a starting point of the virtual movement track.

16. A movement track playback apparatus, comprising:
an obtaining unit, configured to obtain a three-dimensional virtual scene and determine a real movement track of a real object;
a mapping unit, configured to map the real movement track to the three-dimensional virtual scene to obtain a virtual movement track;
a determining unit, configured to determine, in the three-dimensional virtual scene, a virtual object representing the real object and a virtual lens for capturing an image of the virtual object, the virtual lens being kept in a preset relative positional relationship with the virtual object;
a control unit, configured to control the virtual object to move along the virtual movement track, and control the virtual lens to capture the image of the virtual object moving along the virtual movement track; and
a display unit, configured to display the image of the virtual object.

17. An electronic device comprising a processor and a memory, the memory having a plurality of instructions stored therein, and the processor being configured to load the instructions from the memory to execute the operations of the movement track playback method according to any one of claims 1 to 15.

18. A computer-readable storage medium having a plurality of instructions stored therein, the instructions being configured for loading by a processor to execute the operations of the movement track playback method according to any one of claims 1 to 15.

19. A computer program product comprising a computer program/instructions, the computer program/instructions, when executed by a processor, implementing the operations of the movement track playback method according to any one of claims 1 to 15.
